(19) Europäisches Patentamt
European Patent Office
Office européen des brevets

(11) **EP 4 697 884 A1**

(12) **EUROPEAN PATENT APPLICATION**
published in accordance with Art. 153(4) EPC

(43) Date of publication:
**18.02.2026 Bulletin 2026/08**

(21) Application number: **24807403.1**

(22) Date of filing: **29.04.2024**

(51) International Patent Classification (IPC):
**H05K 9/00** *(2006.01)* **H04M 1/02** *(2006.01)*

(52) Cooperative Patent Classification (CPC):
**H04M 1/02; H05K 9/00**

(86) International application number:
**PCT/KR2024/005787**

(87) International publication number:
**WO 2024/237525 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 KR 20230061982**
**23.06.2023 KR 20230081002**

(71) Applicant: **Samsung Electronics Co., Ltd.**
**Suwon-si, Gyeonggi-do 16677 (KR)**

(72) Inventors:
• **HWANG, Inyong**
**Suwon-si Gyeonggi-do 16677 (KR)**
• **KIM, Taehyeok**
**Suwon-si Gyeonggi-do 16677 (KR)**
• **PARK, Joohwan**
**Suwon-si Gyeonggi-do 16677 (KR)**
• **JEON, Minsu**
**Suwon-si Gyeonggi-do 16677 (KR)**

(74) Representative: **HGF**
**HGF Limited**
**4th Floor, 1 City Square**
**Leeds LS1 2ES (GB)**

(54) **ELECTRONIC DEVICE COMPRISING DISCONTINUOUS PART FOR SHIFTING PARASITIC RESONANCE FREQUENCY**

(57) According to one embodiment, an electronic device may comprise: a bracket including a base and a pair of walls formed to protrude from the base; a first printed circuit board disposed on the base; a second printed circuit board, which is disposed on the base and is provided at a position spaced apart from the first printed circuit board; a battery, which is disposed on the base and is disposed between the first printed circuit board and the second printed circuit board; a cable, which is disposed on the base and connects the first printed circuit board and the second printed circuit board; a protrusion, which protrudes from either one wall of the pair of walls to the other wall and contacts the cable; and a discontinuous part formed on the bracket.

FIG. 3C

## Description

## TECHNICAL FIELD

Various embodiments of the present disclosure relate to an electronic device including a discontinuous part for shifting the frequency of parasitic resonance.

## BACKGROUND ART

An electronic device may include a plurality of printed circuit boards (PCBs). The plurality of PCBs may be connected via cables. The cables may be coaxial cables. Parasitic resonance may occur in the cables.

## DISCLOSURE OF THE INVENTION

## TECHNICAL SOLUTIONS

According to an embodiment, an electronic device includes a bracket including a base and a pair of walls protruding from the base, a first printed circuit board (PCB) disposed on the base, a second PCB disposed on the base and spaced apart from the first PCB, a battery disposed on the base and disposed between the first PCB and the second PCB, a cable disposed on the base and configured to connect the first PCB to the second PCB, a protrusion protruding from one wall of the pair of walls toward another wall of the pair of walls and configured to contact the cable, and a discontinuous part formed in the bracket.

According to an embodiment, an electronic device includes a bracket including a base and a pair of walls protruding from the base, a first PCB disposed on the base, a second PCB disposed on the base and spaced apart from the first PCB, a cable disposed on the base and configured to connect the first PCB to the second PCB, a protrusion protruding from one wall of the pair of walls toward another wall of the pair of walls and configured to contact the cable, and a discontinuous part formed in the bracket for shifting a frequency of parasitic resonance caused by a current flowing between the protrusion and the cable at a contact point (CP) between the protrusion and the cable.

According to an embodiment, an electronic device includes a bracket including a base and a pair of walls protruding from the base, a cable disposed on the base, a protrusion protruding from a wall of the pair of walls toward another wall of the pair of walls and configured to contact the cable, and a discontinuous part formed in the bracket for shifting a frequency of parasitic resonance caused by a current flowing between the protrusion and the cable at a CP between the protrusion and the cable.

In an embodiment, using a discontinuous part, an electronic device may ensure communication performance by forming the frequency of parasitic resonance outside the in-band.

The effects of the electronic device including a discontinuous part for shifting the frequency of parasitic resonance, according to various embodiments, are not limited to the foregoing effects, and unstated effects may be clearly understood by those skilled in the art from the description below.

## BRIEF DESCRIPTION OF DRAWINGS

FIG. 1 is a block diagram according to an embodiment.
FIG. 2A is a front perspective view of an electronic device according to an embodiment.
FIG. 2B is a rear perspective view of the electronic device according to an embodiment.
FIG. 2C is an exploded perspective view of the electronic device according to an embodiment.
FIG. 3A is a plan view of an electronic device according to an embodiment.
FIG. 3B is a partial enlarged view of a portion A.
FIG. 3C is a side view of the electronic device according to an embodiment.
FIG. 3D is a cross-sectional view taken along a line I-I of FIG. 3C.
FIG. 3E is a cross-sectional view taken along a line II-II of FIG. 3C.
FIG. 4 is a side view of an electronic device according to an embodiment.
FIG. 5 is a side view of an electronic device according to an embodiment.
FIG. 6A is a side view of an electronic device according to an embodiment.
FIG. 6B is a cross-sectional view taken along a line III-III of FIG. 6A.
FIG. 7 is a plan view of an electronic device according to an embodiment.
FIG. 8 is a plan view partially enlarging an electronic device according to an embodiment.

## BEST MODE FOR CARRYING OUT THE INVENTION

Hereinafter, embodiments are described in detail with reference to the accompanying drawings. When describing the embodiments with reference to the accompanying drawings, like reference numerals refer to like components and a repeated description related thereto will be omitted.

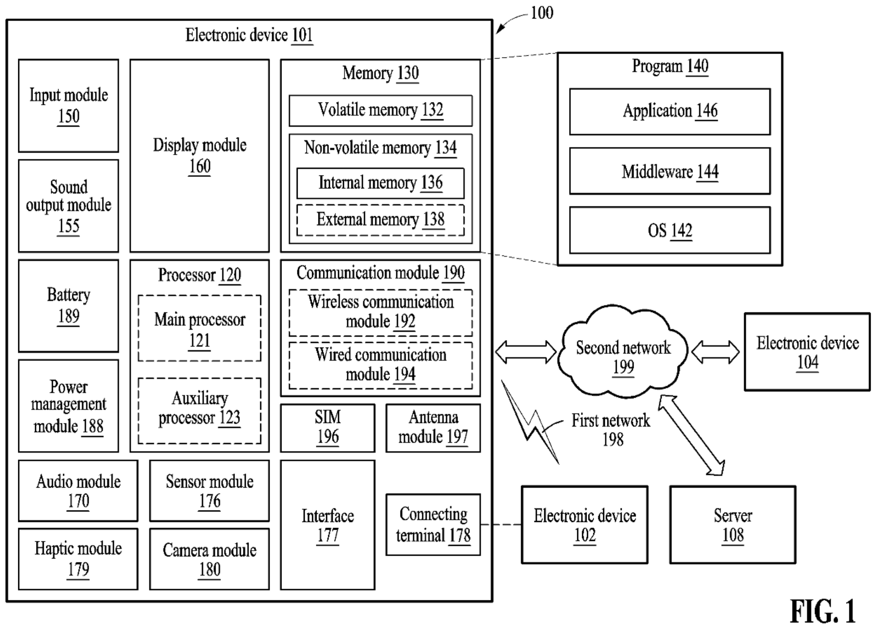

FIG. 1 is a block diagram of an electronic device 101 in a network environment 100 according to an embodiment. Referring to FIG. 1, the electronic device 101 in the network environment 100 may communicate with an electronic device 102 via a first network 198 (e.g., a short-range wireless communication network) or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a wireless power transmission/reception module 187, a battery 189, a communication module 190, a subscriber identification module (SIM) 196, or an antenna module 197. In an embodiment, at least one of the components (e.g., the connecting terminal 178) may be omitted from the electronic device 101, or one or more other components may be added to the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state or together with the main processor 121 while the main processor 121 is an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., an NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., the electronic device 102) (e.g., a speaker or headphone) directly or wirelessly connected to the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC). The wireless power transmission/reception module 187 may be configured to transmit and/or receive power wirelessly.

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip) or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for ensuring performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type from, the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C," and "at least one of A, B, or C", may include any one of, or all possible combinations of the items enumerated together in a corresponding one of the phrases. As used herein, such terms such as "1st" and "2nd," or "first" and "second" may be used to simply distinguish a corresponding component from another, and do not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic", "logic block", "part", or "circuitry." A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

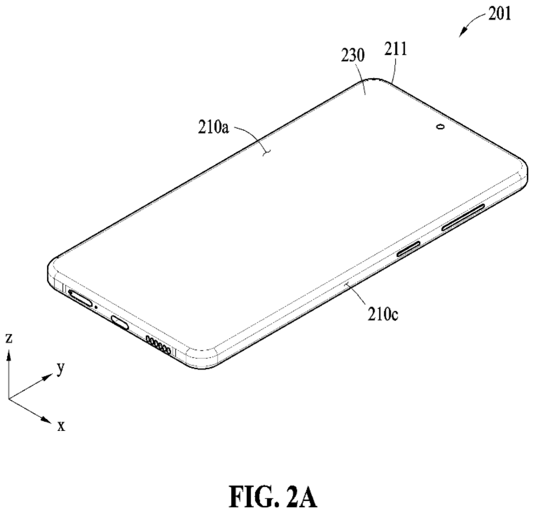

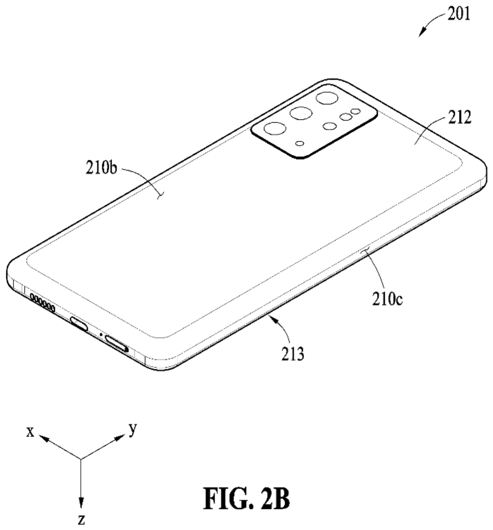

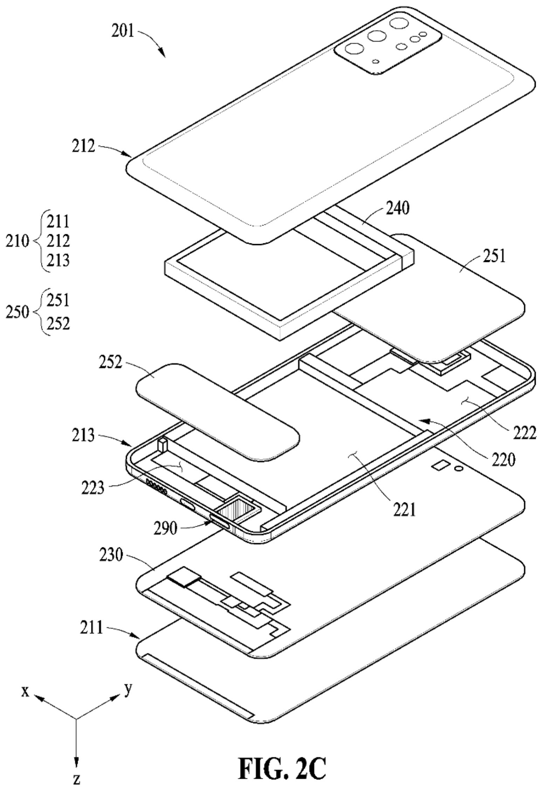

FIG. 2A is a front perspective view of an electronic device according to an embodiment. FIG. 2B is a rear perspective view of the electronic device according to an embodiment. FIG. 2C is an exploded perspective view of the electronic device according to an embodiment. Some internal components are omitted from FIG. 2C for ease of illustration, and the internal components of the electronic device are not limited to those illustrated in FIG. 2C.

Referring to FIGS. 2A, 2B, and 2C, an electronic device 201 (e.g., the electronic device 101 of FIG. 1) according to an embodiment may include a housing 210, a support member 220, a display 230, a battery 240, and a PCB 250.

In an embodiment, the housing 210 may form at least a portion of an exterior of the electronic device 201. The housing 210 may form a front surface 210a (e.g., a first surface), a rear surface 210b (e.g., a second surface), and a side surface 210c (e.g., a third surface) surrounding an inner space between the front surface 210a and the rear surface 210b. For example, the housing 210 may include a first plate 211 (e.g., a front plate), a second plate 212 (e.g., a rear plate), and a side member 213 (e.g., a side bezel structure).

In an embodiment, the front surface 210a may be formed by the first plate 211 of which at least a portion is substantially transparent. For example, the first plate 211 may include a polymer plate or a glass plate including at least one coating layer. In an embodiment, the rear surface 210b may be formed by the second plate 212 that is substantially opaque. For example, the second plate 212 may be formed of coated or tinted glass, ceramic, polymer, metal (e.g., aluminum, stainless steel, or magnesium), or a combination thereof. The side surface 210C may be coupled to the first plate 211 and the second plate 212 and may be formed by the side member 213 including metal and/or polymer. In an embodiment, the second plate 212 and the side member 213 may be integrally and seamlessly formed. In an embodiment, the second plate 212 and the side member 213 may be formed of substantially the same material (e.g., aluminum).

In an embodiment, the side member 213 may surround at least a portion of the inner space between the front surface 210a and the rear surface 210b. The support member 220 may be disposed in the inner space of the housing 210. For example, the support member 220 may be connected to the side member 213 or may be formed integrally with the side member 213. The support member 220 may form an arrangement space of components of the electronic device 201. For example, the support member 220 may connect edges of the first plate 211 and the second plate 212 to each other and surround a space between the first plate 211 and the second plate 212. For example, the display 230 may be coupled to one surface (e.g., a surface in a +z direction) of the support member 220. However, this is only an example, and the number, position and/or shape of the support member 220 is not limited thereto.

In an embodiment, the electronic device 201 may include the display 230 (e.g., the display module 160 of FIG. 1). In an embodiment, the display 230 may be positioned on the front surface 210a. In an embodiment, the display 230 may be exposed through at least a portion of the first plate 211. In an embodiment, the display 230 may have a shape that is substantially the same as the shape of an outer edge of the first plate 211. In some embodiments, an edge of the display 230 may substantially coincide with the outer edge of the first plate 211.

In an embodiment, the battery 240 (e.g., the battery 189 of FIG. 1) may supply power to various electronic components included in the electronic device 201. The battery 240 may be supported by being seated on a space formed by the support member 220. For example, the battery 240 may be disposed in a first space 221 formed by the support member 220.

In an embodiment, various electronic components may be disposed on the PCB 250 to implement a function of the electronic device 201. For example, the PCB 250 may include a first PCB 251 and a second PCB 252. The first PCB 251 and the second PCB 252 may be electrically connected to each other. For example, the first PCB 251 may be disposed in a second space 222 formed by the support member 220. For example, the second PCB 252 may be disposed in a third space 223 formed by the support member 220. To prevent a side portion of the PCB 250 from unnecessarily coming into contact with a metal portion of another component (e.g., the support member 220 and/or the housing 210), the side portion of the PCB 250 may be spaced apart from the metal portion of another component (e.g., the support member 220 and/or the housing 210). However, this is only an example, and the number, position, and/or shape of the PCB 250 is not limited thereto.

In an embodiment, a SIM assembly 290 may be inserted into the housing 210. The SIM assembly 290 may support a SIM card. The SIM card supported by the SIM assembly 290 may be physically and electrically connected to a PCB provided inside the housing 210.

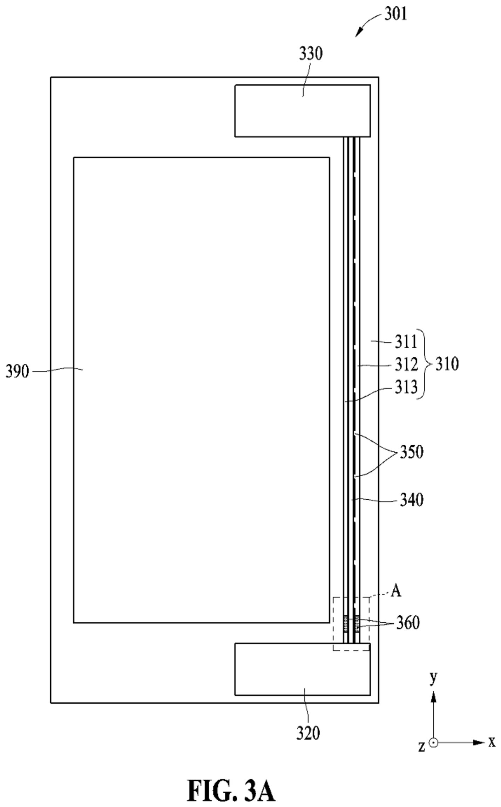

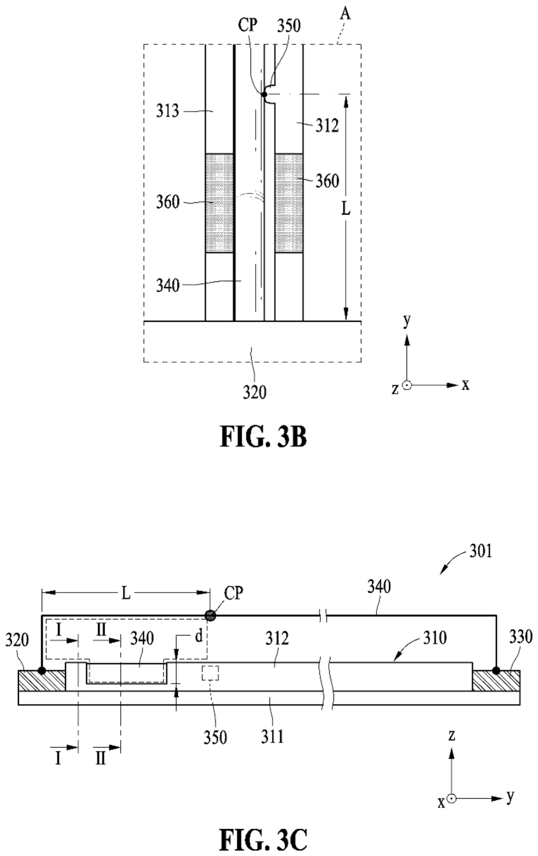

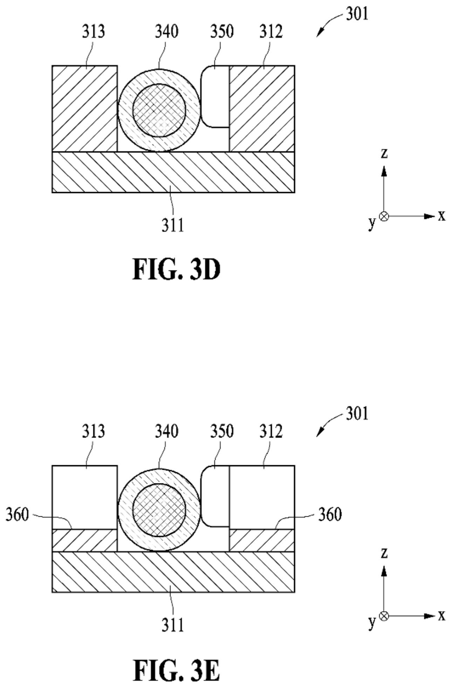

FIG. 3A is a plan view of an electronic device according to an embodiment. FIG. 3B is a partial enlarged view of a portion A. FIG. 3C is a side view of the electronic device according to an embodiment. FIG. 3D is a cross-sectional view taken along a line I-I of FIG. 3C. FIG. 3E is a cross-sectional view taken along a line II-II of FIG. 3C.

It is noted that, for ease of description, the diagrams are schematically illustrated. FIGS. 3A to 3E illustrate the inside of the electronic device. In FIGS. 3A to 3E, a first plate (e.g., the first plate 211 or the front plate of FIG. 2C) and a second plate (e.g., the second plate 212 or the rear plate of FIG. 2C) are omitted.

Referring to FIGS. 3A to 3E, an electronic device 301 (e.g., the electronic device 201 of FIG. 2A) according to an embodiment may include a bracket 310 provided therein, a first PCB 320 disposed on the bracket 310, a second PCB 330 disposed on the bracket 310 and spaced apart from the first PCB 320, a cable 340 connecting the first PCB 320 to the second PCB 330, a protrusion 350 formed on the bracket 310 and supporting the cable 340, a discontinuous part 360 formed on the bracket 310, or a battery 390 disposed on the bracket 310.

According to an embodiment, the bracket 310 may include a base 311 for supporting various components and a pair of walls 312 and 313 protruding from the base 311. The base 311 may have a plate shape. For example, the base 311 may support the first PCB 320 and the second PCB 330. The base 311 may support the battery 390. For example, the pair of walls 312 and 313 may be formed to be elongated in a y-axis direction. The pair of walls 312 and 313 may be formed to protrude from one surface of the base 311. The pair of walls 312 and 313 may be arranged parallel to each other. For example, the pair of walls 312 and 313 may be disposed along a side portion of a battery. The cable 340 may be positioned between the pair of walls 312 and 313. For example, the pair of walls 312 and 313 may be positioned opposite each other with the cable 340 therebetween. The bracket 310 may include a metallic material. For example, the base 311 and the pair of walls 312 and 313 may include a metallic material.

According to an embodiment, the first PCB 320 may be electrically connected to an antenna that transmits an RF signal. The electronic device 301 may maintain good communication performance of the electronic device 301 by forming the frequency of parasitic resonance occurring around the first PCB 320 outside the in-band. According to an embodiment, using the discontinuous part 360, the electronic device 301 may shift the frequency of the parasitic resonance. The reason why the frequency of the parasitic resonance shifts is described in detail below where the discontinuous part 360 is described.

According to an embodiment, the first PCB 320 and/or the second PCB 330 may be physically and/or electrically connected to an input module (e.g., the input module 150 of FIG. 1), an sound output module (e.g., the sound output module 155 of FIG. 1), an audio module (e.g., the audio module 170 of FIG. 1), a sensor module (e.g., the sensor module 176 of FIG. 1), or a camera module (e.g., the camera module 180 of FIG. 1).

According to an embodiment, the cable 340 may connect the first PCB 320 to the second PCB 330. The cable 340 may be disposed on the base 311. The cable 340 may be disposed between the pair of walls 312 and 313. The cable 340 may be disposed along the side portion of the battery 390. The cable 340 may assist in allowing the first PCB 320 and the second PCB 330 to transmit signals to each other. For example, the cable 340 may include a coaxial cable. For example, the cable 340 may include a plurality of layers. For example, the cable 340 may include an outer conductor (not shown). The outer conductor may perform a ground function.

According to an embodiment, the protrusion 350 may be formed to protrude from one of the pair of walls 312 and 313 to support the cable 340. When the protrusion 350 is in contact with the cable 340, coupling may occur between the outer conductor of the cable 340 and the protrusion 350. A current induced by the coupling between the cable 340 and the protrusion 350 may flow between the cable 340 and the wall 312. A portion of the protrusion 350 that is in contact with the cable 340 is referred to as a contact point (CP). A current is induced between the cable 340 and the wall 312 through the CP, and the current may flow along the wall 312 and the cable 340. The current may flow through a closed loop path along the cable 340 and the wall 312 between the CP and the first PCB 320.

For ease of visual comprehension of the loop in FIG. 3C, it is noted that the cable 340 is additionally illustrated with a solid line.

As the loop is formed, parasitic resonance may occur. For example, the length of the wavelength ($\lambda$) of the parasitic resonance may be $2l$. Here, $l$ may be a straight line distance from the point of the cable 340 that is connected to the first PCB 320 to the CP. When there is no discontinuous part 360, the current may flow roughly in a straight line along a surface of the wall 312. The frequency of the parasitic resonance may be calculated according to [Equation 1] below, assuming that there is no discontinuous part 360. In [Equation 1], $\lambda$=wavelength, f=frequency, c=speed of light, $\mu$r=relative permeability, and $\epsilon$r=relative permittivity.

[Equation 1]

$$f = \frac{c}{\lambda\sqrt{\mu_r \varepsilon_r}} = \frac{c}{2l\sqrt{\mu_r \varepsilon_r}}$$

According to an embodiment, the discontinuous part 360 may be formed on the wall 312 to increase the length of the closed loop path. For example, the discontinuous part 360 may include a groove recessed in a surface of the wall 312. When the discontinuous part 360 is formed, the current flowing between the cable 340 and the protrusion 350 may travel along the surface of the wall 312 and the discontinuous part 360. Since the current travels along the surface of the wall 312 and the discontinuous part 360, the length of the wavelength ($\lambda$) of the parasitic resonance may be $2l + 2d$. Here, d may be the height of the discontinuous part 360. The height of the discontinuous part 360 may correspond to the length in a z-axis direction. When the discontinuous part 360 is provided, the length of the wavelength of the parasitic resonance may be relatively increased. The frequency of the parasitic resonance may be calculated according to [Equation 2] below. In [Equation 2], $\lambda$=wavelength, f=frequency, c=speed of light, $\mu$r=relative permeability, and $\epsilon$r=relative permittivity.

[Equation 2]

$$f = \frac{c}{\lambda\sqrt{\mu_r \varepsilon_r}} = \frac{c}{(2l+2d)\sqrt{\mu_r \varepsilon_r}}$$

In an embodiment, when the distance in the y-axis direction corresponding to the width of the discontinuous part 360 is short, coupling occurs, so the length of the wavelength of the actual parasitic resonance may be less than $2l + 2d$.

The distance over which the current flows between the CP and the first PCB 320 along the surface of the wall 312 and the discontinuous part 360 may be greater than the distance over which the current flows between the CP and the first PCB 320 along the cable 340. The discontinuous part 360 may shift the frequency of the parasitic resonance caused by the current flowing through the closed loop path.

According to an embodiment, the protrusion 350 may be provided as a plurality of protrusions. A current may flow between any one of the plurality of protrusions 350 and the cable 340. For example, a protrusion closest to the first PCB 320 may be referred to as a first protrusion, and protrusions further away from the first PCB 320 may be referred to as a second protrusion and a third protrusion.

For example, when parasitic resonance occurs as a current flows between the first protrusion and the cable 340, the frequency of the parasitic resonance may be formed in a frequency band higher than the in-band. When the frequency of the parasitic resonance is formed in the frequency band higher than the in-band, the parasitic resonance may not adversely affect the performance of the electronic device 301.

For example, when parasitic resonance occurs as a current flows between the third protrusion and the cable, the frequency of the parasitic resonance may be formed in a frequency band lower than the in-band. When the frequency of the parasitic resonance is formed in the frequency band lower than the in-band, the parasitic resonance may not adversely affect the performance of the electronic device 301.

For example, when parasitic resonance occurs as a current flows between the second protrusion and the cable, the frequency of the parasitic resonance may be formed in an in-band frequency band. When the frequency of the parasitic resonance is formed in the in-band frequency band, the parasitic resonance may adversely affect the performance of the electronic device 301. In this case, the electronic device 301 may increase the length of the closed loop path by forming the discontinuous part 360 in a region between the second protrusion and the first PCB 320. Due to the discontinuous part 360, the frequency band of the parasitic resonance may be shifted.

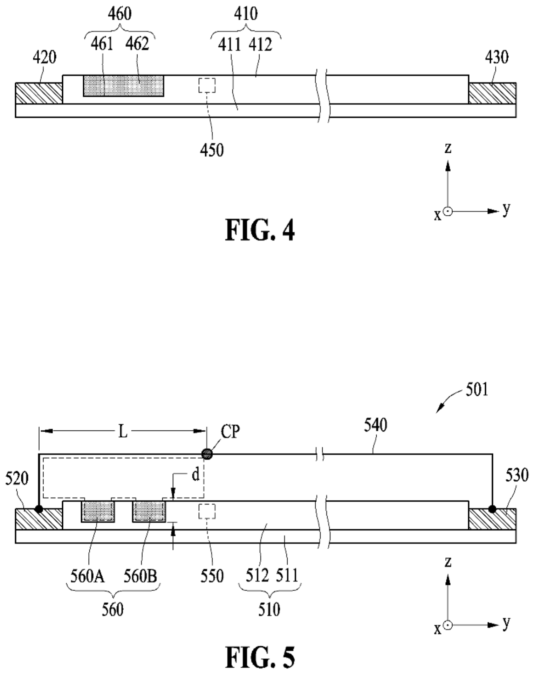

FIG. 4 is a side view of an electronic device according to an embodiment.

Referring to FIG. 4, an electronic device 401 may include a bracket 410, a first PCB 420, a second PCB 430, a protrusion 450, and a discontinuous part 460. The bracket 410 may include a base 411 and a wall 412. In an embodiment, the discontinuous part 460 may include a groove 461 recessed in a surface of the wall 412 and a non-metallic part 462 formed in the groove 461. For example, the non-metallic part 462 may be formed as an injection mold. For example, the non-metallic part may be plastic. The non-metallic part 462 may increase the structural stability of the wall 412.

FIG. 5 is a side view of an electronic device according to an embodiment.

Referring to FIG. 5, an electronic device 501 may include a bracket 510, a first PCB 520, a second PCB 530, a protrusion 550, and a discontinuous part 560. The bracket 510 may include a base 511 and a wall 512. In an embodiment, the discontinuous part 560 may be provided as a plurality of discontinuous parts. For example, the discontinuous part 560 may include a first discontinuous part 560A and a second discontinuous part 560B. The first discontinuous part 560A and the second discontinuous part 560B may be spaced apart from each other along a longitudinal direction of the wall 512. The length of the wavelength ($\lambda$) of parasitic resonance may be $2l + 4d$. The frequency of the parasitic resonance may be calculated according to [Equation 3] below. In [Equation 3], $\lambda$=wavelength, f=frequency, c=speed of light, $\mu$r=relative permeability, and $\varepsilon$r=relative permittivity.

[Equation 3]

$$f = \frac{c}{\lambda\sqrt{\mu_r \varepsilon_r}} = \frac{c}{(2l+4d)\sqrt{\mu_r \varepsilon_r}}$$

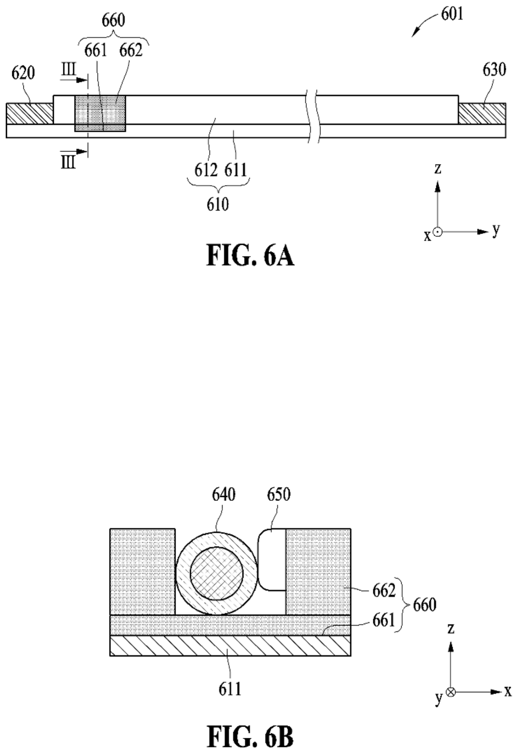

FIG. 6A is a side view of an electronic device according to an embodiment. FIG. 6B is a cross-sectional view taken along a line III-III of FIG. 6A.

Referring to FIG. 6, an electronic device 601 may include a bracket 610, a first PCB 620, a second PCB 630, a protrusion 650, and a discontinuous part 660. The bracket 610 may include a base 611 and a wall 612. In an embodiment, the discontinuous part 660 may include a groove 661 recessed in the wall 612 and the base 611 and a non-metallic part 662 formed in the groove 661. For example, the non-metallic part 662 may be formed as an injection mold. For example, the non-metallic part may be plastic. The non-metallic part 662 may increase the structural stability of the wall 612. The height of the discontinuous part 660 may be greater than the height of the wall 612. Here, it is noted that the height of the discontinuous part 660 is in a z-axis direction.

In an embodiment, the non-metallic part 662 may be provided on both sides of the wall 612.

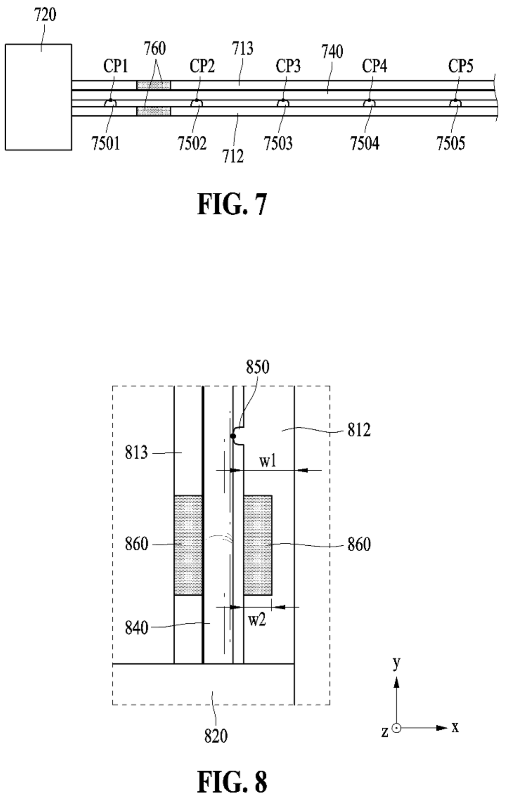

FIG. 7 is a plan view of an electronic device according to an embodiment.

Referring to FIG. 7, the electronic device may include a plurality of protrusions 7501, 7502, 7503, 7504, and 7505. Coupling may occur between any one of the plurality of protrusions 7501, 7502, 7503, 7504, and 7505 and a cable 740. The cable 740 may be positioned between a pair of walls 712 and 713. For example, the plurality of protrusions 7501, 7502, 7503, 7504, and 7505 may include a first protrusion 7501 provided close to a PCB 720, and a second protrusion 7502, a third protrusion 7503, a fourth protrusion 7504, and a fifth protrusion 7505 arranged in a direction away from the PCB 720.

A portion at which the first protrusion 7501 is in contact with the cable 740 may be referred to as a first CP CP1, a portion at which the second protrusion 7502 is in contact with the cable 740 may be referred to as a second CP CP2, a portion at which the third protrusion 7503 is in contact with the cable 740 may be referred to as a third CP CP3, a portion at which the fourth protrusion 7504 is in contact with the cable 740 may be referred to as a fourth CP CP4, and a portion at which the fifth protrusion 7505 is in contact with the cable 740 may be referred to as a fifth CP CP5.

For example, when parasitic resonance occurs due to coupling between the first protrusion 7501 and the cable 740, the frequency of the parasitic resonance may be formed in a frequency band higher than the in-band. When the frequency of the parasitic resonance is formed in the frequency band higher than the in-band, the parasitic resonance may not adversely affect the performance of the electronic device.

For example, when parasitic resonance occurs as a current flows between the cable 740 and any one of the third protrusion 7503, the fourth protrusion 7504, and the fifth protrusion 7505, the frequency of the parasitic resonance may be formed in a frequency band lower than the in-band. When the frequency of the parasitic resonance is formed in the frequency band lower than the in-band, the parasitic resonance may not adversely affect the performance of the electronic device.

For example, when parasitic resonance occurs as a current flows between the second protrusion 7502 and the cable 740, the frequency of the parasitic resonance may be formed in an in-band frequency band. When the frequency of the parasitic resonance is formed in the in-band frequency band, the parasitic resonance may adversely affect the performance of the electronic device. In this case, the electronic device may increase the length of the closed loop path by forming a discontinuous part 760 in a region between the first protrusion 7501 and the second protrusion 7502.

FIG. 8 is a plan view partially enlarging an electronic device according to an embodiment.

Referring to FIG. 8, an electronic device (e.g., the electronic device 201 of FIG. 2A) according to an embodiment may include the bracket 310 including a pair of walls 812 and 813, a PCB 820, a cable 840 connected to the PCB 820, a protrusion 850 formed on the bracket 310 and supporting the cable 840, or a discontinuous part 860 formed on the pair of walls 812 and 813. A width w1 of the wall 812 may be greater than a width w2 of the discontinuous part 860. For example, the width w2 of the discontinuous part 860 formed on the wall 812 may be less than the width of the wall 812. Among the pair of walls 812 and 813, the wall 812 provided on the outside of the electronic device may have at least one surface exposed to the outside. According to this structure, even when the discontinuous part 860 is provided on the wall 812 while one surface of the wall 812 is exposed to the outside, the discontinuous part 860 may not be exposed to the outside. The width of the discontinuous part 860 formed on the wall 813 may be substantially the same as the width of the wall 813.

According to an embodiment, an electronic device may include a bracket 310 including a base and a pair of walls protruding from the base, a first PCB 320 disposed on the base, a second PCB 330 disposed on the base and spaced apart from the first PCB, a battery 390 disposed on the base and disposed between the first PCB and the second PCB, a cable 340 disposed on the base and configured to connect the first PCB to the second PCB, a protrusion 350 protruding from one wall of the pair of walls toward another wall of the pair of walls and configured to contact the cable, and a discontinuous part 360 formed in the bracket.

In an embodiment, at a CP between the protrusion and the cable, a current flows between the protrusion and the cable, and the current flows through a closed loop path along the cable and a wall between the CP and the first PCB

In an embodiment, the discontinuous part 360 may increase the length of the closed loop path.

In an embodiment, the distance over which the current flows along the wall and discontinuous part may be greater than the distance over which the current flows along the cable.

In an embodiment, the discontinuous part 360 may be provided as a pair of discontinuous parts, and each of the pair of discontinuous parts 360 may be provided on a different wall of the pair of walls.

In an embodiment, the pair of discontinuous parts 360 may be provided on opposite sides with respect to the cable.

In an embodiment, the discontinuous part 360 may be configured to shift a frequency of parasitic resonance caused by the current flowing through the closed loop path.

In an embodiment, the discontinuous part 460 may include a groove 461 recessed in each of the pair of walls.

In an embodiment, the groove 461 may be provided as a plurality of grooves along a longitudinal direction of the wall.

In an embodiment, the discontinuous part 460 may include a non-metallic part that is formed in the groove.

In an embodiment, the groove 461 may be recessed in at least a portion of the wall and the base.

In an embodiment, the discontinuous part 560 may be provided as a plurality of discontinuous parts on the pair of walls.

In an embodiment, among the plurality of discontinuous parts, some discontinuous parts disposed on different walls may be positioned at least partially parallel to one another based on a direction perpendicular to a longitudinal direction of the cable.

In an embodiment, among the plurality of discontinuous parts, discontinuous parts disposed on a same wall may be spaced apart from one another along the longitudinal direction of the wall.

In an embodiment, the discontinuous part 760 may be positioned between the PCB and the protrusion.

In an embodiment, the protrusion may be provided as a plurality of protrusions along the longitudinal direction of the wall, and the discontinuous part may be positioned between two adjacent protrusions among the plurality of protrusions.

In an embodiment, a width of the discontinuous part 860 may be equal to or less than a width of the wall.

According to an embodiment, an electronic device may include a bracket 310 including a base and a pair of walls protruding from the base, a first PCB 320 disposed on the base, a second PCB 330 disposed on the base and spaced apart from the first PCB, a cable 340 disposed on the base and configured to connect the first PCB to the second PCB, a protrusion 350 protruding from one wall of the pair of walls toward another wall of the pair of walls and configured to contact the cable, and a discontinuous part 360 formed in the bracket for shifting a frequency of parasitic resonance caused by a current flowing between the protrusion and the cable at a CP between the protrusion and the cable.

In an embodiment, the discontinuous part 460 may include a groove 461 recessed in the wall.

In an embodiment, the discontinuous part 460 may include a non-metallic part that is filled in the groove.

In an embodiment, the discontinuous part 460 may be provided as a plurality of discontinuous parts spaced apart from one another along a longitudinal direction of the wall.

According to an embodiment, an electronic device may include a bracket 310 including a base and a pair of walls protruding from the base, a cable 340 disposed on the base, a protrusion 350 protruding from one wall of the pair of walls toward another wall of the pair of walls and configured to contact the cable, and a discontinuous part 360 formed in the bracket for shifting a frequency of parasitic resonance caused by a current flowing between the protrusion and the cable at a CP between the protrusion and the cable.

**Claims**

1. An electronic device comprising:

   a bracket (310) comprising a base and a pair of walls protruding from the base;
   a first printed circuit board (PCB) (320) disposed on the base;
   a second PCB (330) disposed on the base and spaced apart from the first PCB;
   a battery (390) disposed on the base and disposed between the first PCB and the second PCB;
   a cable (340) disposed on the base, configured to connect the first PCB to the second PCB, and disposed between the pair of walls;
   a protrusion (350) protruding from one wall of the pair of walls toward another wall of the pair of walls and configured to contact the cable; and
   a discontinuous part (360) formed on the pair of walls.

2. The electronic device of claim 1, wherein at a contact point (CP) between the protrusion and the cable, a current flows between the protrusion and the cable, and the current flows through a closed loop path along the cable and a wall between the CP and the first PCB.

3. The electronic device of claim 1 or 2, wherein the discontinuous part (360) is provided as a pair of discontinuous parts, and each of the pair of discontinuous parts (360) is provided on a different wall of the pair of walls.

4. The electronic device of any one of claims 1 to 3, wherein the pair of discontinuous parts (360) is provided on opposite sides with respect to the cable.

5. The electronic device of any one of claims 1 to 4, wherein the discontinuous part (360) is configured to shift a frequency of parasitic resonance caused by the current flowing through the closed loop path.

6. The electronic device of any one of claims 1 to 5, wherein the discontinuous part (460) comprises a groove (461) recessed in each of the pair of walls.

7. The electronic device of any one of claims 1 to 6, wherein the groove (461) is provided as a plurality of grooves along a longitudinal direction of the wall.

8. The electronic device of any one of claims 1 to 7, wherein the discontinuous part (460) comprises a non-metallic part (462) that is formed in the groove.

9. The electronic device of any one of claims 1 to 8, wherein the groove (461) is recessed in at least a portion of the wall and the base.

10. The electronic device of any one of claims 1 to 9, wherein the discontinuous part (560) is provided as a plurality of discontinuous parts on the pair of walls.

11. The electronic device of any one of claims 1 to 10, wherein, among the plurality of discontinuous parts, some discontinuous parts disposed on different walls are positioned at least partially parallel to one another based on a direction perpendicular to a longitudinal direction of the cable.

12. The electronic device of any one of claims 1 to 11, wherein, among the plurality of discontinuous parts, discontinuous parts disposed on a same wall are spaced apart from one another along the longitudinal direction of the wall.

13. The electronic device of any one of claims 1 to 12, wherein the discontinuous part (760) is positioned between the PCB and the protrusion.

14. The electronic device of any one of claims 1 to 13, wherein the protrusion is provided as a plurality of protrusions along the longitudinal direction of the wall, and the discontinuous part is positioned between two adjacent protrusions among the plurality of protrusions.

15. The electronic device of any one of claims 1 to 14, wherein a width of the discontinuous part (860) is equal to or less than a width of the wall.

FIG. 1

EP 4 697 884 A1

FIG. 2A

FIG. 2B

FIG. 2C

301

330

311
312 } 310
313

350

340

390

A

360

y

z ⊙ → x

320

**FIG. 3A**

FIG. 3B

FIG. 3C

FIG. 3D

FIG. 3E

FIG. 4

FIG. 5

**FIG. 6A**

**FIG. 6B**

**FIG. 7**

**FIG. 8**

## INTERNATIONAL SEARCH REPORT

| International application No. |
|---|
| **PCT/KR2024/005787** |

| A. | CLASSIFICATION OF SUBJECT MATTER |
|---|---|

**H05K 9/00**(2006.01)i; **H04M 1/02**(2006.01)i

According to International Patent Classification (IPC) or to both national classification and IPC

| B. | FIELDS SEARCHED |
|---|---|

Minimum documentation searched (classification system followed by classification symbols)

H05K 9/00(2006.01); E05D 11/00(2006.01); F25D 23/02(2006.01); G09G 3/3208(2016.01); H01Q 1/38(2006.01); H04M 1/02(2006.01); H05K 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전자 장치(electronic device), 인쇄회로기판(printed circuit board), 케이블 연결 (cable connection), 브라켓(bracket)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2017-0140691 A (SAMSUNG ELECTRONICS CO., LTD.) 21 December 2017 (2017-12-21) See paragraphs [0159]-[0160]; claims 1 and 6; and figure 10. | 1,3 |
| A | | 2 |
| Y | KR 10-2018-0080032 A (SAMSUNG ELECTRONICS CO., LTD.) 11 July 2018 (2018-07-11) See paragraphs [0057]-[0058]; claims 4-5; and figure 4. | 1,3 |
| A | KR 10-2018-0025669 A (LG ELECTRONICS INC.) 09 March 2018 (2018-03-09) See paragraphs [0031]-[0177]; and figures 1-22. | 1-3 |
| A | KR 10-2020-0048135 A (SAMSUNG ELECTRONICS CO., LTD. et al.) 08 May 2020 (2020-05-08) See paragraphs [0016]-[0095]; and figures 1-7c. | 1-3 |
| A | KR 10-2023-0054644 A (LG DISPLAY CO., LTD.) 25 April 2023 (2023-04-25) See paragraphs [0027]-[0069]; and figures 1-5. | 1-3 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **02 August 2024** | **02 August 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 697 884 A1

## INTERNATIONAL SEARCH REPORT

International application No.

**PCT/KR2024/005787**

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **4-15**
because they are dependent claims and are not drafted in accordance with the second and third sentences of Rule 6.4(a).

Form PCT/ISA/210 (continuation of first sheet) (July 2022)

23

## INTERNATIONAL SEARCH REPORT
### Information on patent family members

International application No.

**PCT/KR2024/005787**

| Patent document cited in search report | | | Publication date (day/month/year) | Patent family member(s) | | | Publication date (day/month/year) |
|---|---|---|---|---|---|---|---|
| KR | 10-2017-0140691 | A | 21 December 2017 | EP | 3455904 | A1 | 20 March 2019 |
| | | | | KR | 10-2023-0110222 | A | 21 July 2023 |
| | | | | KR | 10-2553177 | B1 | 10 July 2023 |
| | | | | US | 10727568 | B2 | 28 July 2020 |
| | | | | US | 10978789 | B2 | 13 April 2021 |
| | | | | US | 11569565 | B2 | 31 January 2023 |
| | | | | US | 11749880 | B2 | 05 September 2023 |
| | | | | US | 2017-0358847 | A1 | 14 December 2017 |
| | | | | US | 2020-0358166 | A1 | 12 November 2020 |
| | | | | US | 2021-0226320 | A1 | 22 July 2021 |
| | | | | US | 2023-0134315 | A1 | 04 May 2023 |
| | | | | US | 2023-0411832 | A1 | 21 December 2023 |
| | | | | WO | 2017-217714 | A1 | 21 December 2017 |
| KR | 10-2018-0080032 | A | 11 July 2018 | CN | 108266954 | A | 10 July 2018 |
| | | | | CN | 108266954 | B | 16 July 2021 |
| | | | | EP | 3343152 | A1 | 04 July 2018 |
| | | | | KR | 10-2253487 | B1 | 18 May 2021 |
| | | | | US | 10563904 | B2 | 18 February 2020 |
| | | | | US | 11047612 | B2 | 29 June 2021 |
| | | | | US | 2018-0187956 | A1 | 05 July 2018 |
| | | | | US | 2020-0149800 | A1 | 14 May 2020 |
| KR | 10-2018-0025669 | A | 09 March 2018 | CN | 107657899 | A | 02 February 2018 |
| | | | | CN | 107657899 | B | 11 August 2020 |
| | | | | CN | 207303101 | U | 01 May 2018 |
| | | | | EP | 3280135 | A1 | 07 February 2018 |
| | | | | EP | 3280135 | B1 | 07 October 2020 |
| | | | | KR | 10-2551121 | B1 | 05 July 2023 |
| | | | | US | 10306781 | B2 | 28 May 2019 |
| | | | | US | 2018-0027672 | A1 | 25 January 2018 |
| KR | 10-2020-0048135 | A | 08 May 2020 | KR | 10-2553112 | B1 | 07 July 2023 |
| | | | | US | 11876317 | B2 | 16 January 2024 |
| | | | | US | 2021-0384662 | A1 | 09 December 2021 |
| | | | | WO | 2020-091280 | A1 | 07 May 2020 |
| KR | 10-2023-0054644 | A | 25 April 2023 | KR | 10-2017-0079260 | A | 10 July 2017 |
| | | | | KR | 10-2649522 | B1 | 19 March 2024 |

Form PCT/ISA/210 (patent family annex) (July 2022)